# EUROPÄISCHE PATENTANMELDUNG

(11) **EP 4 325 672 A1**
(43) Veröffentlichungstag der Anmeldung: **21.02.2024**
(21) Anmeldenummer: 23188418.0
(22) Anmeldetag: 28.07.2023
(51) Int. Cl.: H01R 13/629, B60L 53/16, E05B 47/00, H01R 13/639

(54) **ELEKTRISCHER STECKVERBINDER UND STECKVERBINDERSYSTEM**

(30) Priorität: 16.08.2022 DE 102022208502
(71) Anmelder: Franz Binder GmbH + Co. Elektrische Bauelemente KG, 74172 Neckarsulm (DE)
(72) Erfinder: Simbürger, Matthias, 84056 Rottenburg an der Laaber (DE); Schneider, Michael, 87669 Rieden am Forgensee (DE); Ebert, Peter, 76703 Kraichtal (DE)
(74) Vertreter: Ullrich & Naumann PartG mbB

(57) **Zusammenfassung**

Ein elektrischer Steckverbinder, insbesondere zur Signal- und/oder Stromübertragung, vorzugsweise zum Laden von elektrischen Fahrzeugen bzw. vom Akkumulatoren elektrischer Fahrzeuge, mit einem Kupplungsgehäuse zur Verbindung mit einem korrespondierenden zweiten elektrischen Steckverbinder, wobei an dem Kupplungsgehäuse ein Verriegelungsbügel von einer geöffneten Position in eine geschlossene Position bewegbar angeordnet ist, wobei der Verriegelungsbügel eine Ausnehmung aufweist, in die ein Verriegelungselement des zweiten Steckverbinders in der geöffneten Position des Verriegelungsbügels einbringbar ist und wobei in der geschlossenen Position des Verriegelungsbügels das Verriegelungselement derart in der Ausnehmung angeordnet ist, dass das Kupplungsgehäuse form- und/oder kraftschlüssig mit dem zweiten Steckverbinder verbunden ist, wobei an dem Kupplungsgehäuse eine Rasteinrichtung mit mindestens einem Rastelement angeordnet ist, wobei das Rastelement in der geschlossenen Position des Verriegelungsbügels in eine Rastaufnahme des Verriegelungsbügels eingreift und wobei ein elektrisch bewegbares Sperrelement angeordnet ist, das in einer Sperrposition eine Bewegung des Rastelements hemmt.

## Beschreibung

Die Erfindung betrifft einen elektrischen Steckverbinder, insbesondere zur Signal- und/oder Stromübertragung, vorzugsweise zum Laden von elektrischen Fahrzeugen bzw. von Akkumulatoren elektrischer Fahrzeuge, mit einem Kupplungsgehäuse zur Verbindung mit einem korrespondierenden zweiten elektrischen Steckverbinder.

Des Weiteren betrifft die Erfindung ein Steckverbindersystem, insbesondere zur Signal- und/oder Stromübertragung, vorzugsweise zum Laden von elektrischen Fahrzeugen bzw. vom Akkumulatoren elektrischer Fahrzeuge,

Eine Schwachstelle der Elektromobilität im Allgemeinen ist derzeit eine zu geringe Reichweite der Fahrzeuge bzw. zu lange Ladezeiten. Eine Möglichkeit Umwegen zu Ladestationen und Zeitverluste an den Ladestationen zu entgegnen besteht darin, den entladenen Akku durch einen bereits geladenen schnell zu ersetzen, d.h., die Steckverbinder müssen einfach handhabbar sein.

Weiterhin muss sichergestellt werden, dass vor dem Trennen die elektronischen Systeme heruntergefahren sind, damit keine Beschädigungen entstehen. Erst dann darf die Kontakttrennung erfolgen, um evtl. Beschädigungen der Elektronik zu vermeiden.

Da bei gegebenen Stecksystemen die Hochspannungsleitungen und Signalleitungen gleichzeitig getrennt werden, besteht die Gefahr einer Lichtbogenbildung, eines Funkenschlags oder die Entstehung von Spannungsspitzen, was es zu vermeiden gilt. Zur Verbesserung des Bedienkomforts wird daher ein Verriegelungsbügel verwendet, der beim Schließen den zweiten Steckverbinder an das Kupplungsgehäuse heranzieht. Die vorliegende Erfindung betrifft also auch einen kompakten Batteriestecker mit Schnellverschlusssystem und gesteuerter Verriegelung, der ein schnelles und sicheres Wechseln dieser Akkus ermöglicht.

Lediglich beispielhaft wird auf das Dokument EP 1 093 191 B1 verwiesen, das einen elektrische Steckverbinder mit Verriegelungsbügel zeigt.

Der vorliegenden Erfindung liegt die Aufgabe zugrunde, einen elektrischen Steckverbinder derart auszugestalten und weiterzubilden, dass mit konstruktiv einfachen

Mitteln und somit kostengünstig, eine sichere Steckverbindung herstellbar ist. Des Weiteren soll ein verbessertes Steckverbindersystem angegeben werden.

Erfindungsgemäß wird die voranstehende Aufgabe in Bezug auf den elektrischen Steckverbinder durch die Merkmale des Anspruches 1 gelöst. Damit ist ein elektrischer Steckverbinder, insbesondere zur Signal- und/oder Stromübertragung, vorzugsweise zum Laden von elektrischen Fahrzeugen bzw. vom Akkumulatoren elektrischer Fahrzeuge, beansprucht, mit einem Kupplungsgehäuse zur Verbindung mit einem korrespondierenden zweiten elektrischen Steckverbinder, wobei an dem Kupplungsgehäuse ein Verriegelungsbügel von einer geöffneten Position in eine geschlossene Position bewegbar angeordnet ist, wobei der Verriegelungsbügel eine Ausnehmung aufweist, in die ein Verriegelungselement des zweiten Steckverbinders in der geöffneten Position des Verriegelungsbügels einbringbar ist und wobei in der geschlossenen Position des Verriegelungsbügels das Verriegelungselement derart in der Ausnehmung angeordnet ist, dass das Kupplungsgehäuse form- und/oder kraftschlüssig mit dem zweiten Steckverbinder verbunden ist, wobei an dem Kupplungsgehäuse eine Rasteinrichtung mit mindestens einem Rastelement angeordnet ist, wobei das Rastelement in der geschlossenen Position des Verriegelungsbügels in eine Rastaufnahme des Verriegelungsbügels eingreift und wobei ein elektrisch bewegbares Sperrelement angeordnet ist, das in einer Sperrposition eine Bewegung des Rastelements hemmt.

In Bezug auf das Steckverbindersystem wird die voranstehende Aufgabe durch die Merkmale von Anspruch 15 gelöst. Damit ist ein Steckverbindersystem, insbesondere zur Signal- und/oder Stromübertragung, vorzugsweise zum Laden von elektrischen Fahrzeugen bzw. vom Akkumulatoren elektrischer Fahrzeuge, beansprucht, mit einem elektrischen Steckverbinder nach einem der Ansprüche 1 bis 14 und einem zweiten elektrischen Steckverbinder mit mindestens einem Verriegelungselement.

In erfindungsgemäßer Weise ist erkannt worden, dass durch die Kombination einer Rastverbindung mit einem das Rastelement in der geschlossenen Position hemmenden Sperrelement, eine steuerbare Verriegelungsvorrichtung bzw. Entriegelungsvorrichtung realisierbar ist, die in einer geschirmten und/oder ungeschirmten elektrischen Steckverbindung auf kleinstem Bauraum integrierbar ist. Nach dem Schließen des Verriegelungsbügels wird das Sperrelement, beispielsweise über einen elektromechanischen Aktor, bewegt und somit das Rastelement mechanisch blockiert. Diese Blockade wird aufgehoben, indem das Sperrelement in eine geöffnete Position verbracht wird, beispielweise indem der Aktor erneut ein Steuersignal erhält.

Die erfindungsgemäße Lehre ist insbesondere geeignet zur Realisierung eines geschirmten elektrischen Steckverbinders, der für Signal- und Hochstromübertragung geeignet ist und mit einer zeitlich gesteuerten Entriegelung ausgestattet sein kann. Beispielsweise kann der elektrische Steckverbinder bei Outdoor-Anwendungen, insbesondere für E-Fahrzeuge, die auch für schwieriges Gelände geeignet sind, genutzt werden.

Ein weiterer Vorteil der erfindungsgemäßen Lehre besteht darin, dass durch die, vorzugsweise steuerbare, Ver-/Entriegelung verhindert wird, dass die Steckverbindung unter Last unbefugt getrennt werden kann. Es wird dadurch verhindert, dass Spannungsspitzen entstehen, die zu einem Funkenüberschlag bzw. ggf. zur Bildung eines Lichtbogens führen und somit elektronische Systeme beschädigen oder zerstören können. Der vorliegende Steckverbinder bzw. das Steckverbindersystem kann eine große Anzahl von Kontakten aufweisen, deren Steck- und Ziehkräfte sich zu einer beachtlichen Gesamtkraft aufsummieren können. Durch die mechanische Ausgestaltung der erfindungsgemäßen Lehre ist jedoch gewährleistet, dass der Bediener die Steckverbindung schnell, komfortabel und sicher verriegeln und entriegeln kann. Auch ist durch die blockierbare Rastverbindung sichergestellt, dass sich die Steckverbindung durch Schock und Vibration nicht selbstständig öffnet und daher jederzeit zuverlässig funktionsfähig und bedienbar bleibt.

Da die erfindungsgemäße, sehr kompakte Vorrichtung konstruktiv beispielsweise einem am Fahrzeug befindlichen Kupplungsgehäuse zugeordnet werden kann, lässt sich eine deutliche Kostenreduzierung dadurch erreichen, dass diese teurere Vorrichtung nur einmal pro Fahrzeug investiert werden muss.

In vorteilhafter Weise kann der Rastmechanismus als elastisches Rastelement, vorzugsweise mit einem am freien Ende angeordneten Rasthaken, ausgebildet sein. Mit anderen Worten kann es sich bei dem Rastelement um einen Schnapparm handeln, so dass ein äußerst kompaktes Verriegelungssystem geschaffen ist. In weiter vorteilhafter Weise können zwei Rastelemente, vorzugsweise spiegelbildlich zueinander, angeordnet sein. Somit ist eine Schnappverbindung realisiert, wobei das Sperrelement in der Sperrposition zwischen den Rastelementen angeordnet sein kann, so dass die Schnappverbindung aufgrund der Blockade der Rastelemente durch das Sperrelement nicht lösbar ist. Dies hat den weiteren Vorteil, dass die zuverlässige Verriegelung im Wesentlichen durch nur zwei Toleranzparameter bestimmt ist, nämlich durch den Spalt zwischen den Rastelementen und dem Durchmesser des Sperrelements. Somit ist eine einfache konstruktive Auslegung möglich. Auch ergeben sich bzgl. der Montage keine besonderen Anforderungen an die korrespondierenden Bauteile.

Gemäß einer vorteilhaften Ausgestaltung kann der Verriegelungsbügel zwei Seitenarme und ein die Seitenarme verbindendes Verbindungselement aufweisen. Des Weiteren kann die Rastaufnahme an dem Verbindungselement, vorzugsweise mittig zwischen den Seitenarmen, angeordnet sein. Insbesondere kann die Rastaufnahme durch eine entsprechend geformte Ausnehmung in dem Verbindungselement, vorzugsweise mittig, realisiert sein, so dass die Rastaufnahme integraler Bestandteil des Verriegelungsbügels ist.

Des Weiteren ist es denkbar, dass an der Rastaufnahme ein Rastvorsprung ausgebildet ist, an dem das Rastelement in der geschlossenen Position des Verriegelungsbügels hintergreift, vorzugsweise mit einem Rasthaken. Dadurch wird eine sichere Verbindung im Sinne einer Schnappverbindung verwirklicht. Zusätzlich kann an dem Rastvorsprung der Rastaufnahme eine Einführschräge angeordnet sein, um das Einführen des Rastelements zu erleichtern. Die Rastelemente können korrespondierende Einführschrägen aufweisen.

In vorteilhafter Weise kann die Rasteinrichtung ein Dichtelement aufweisen, wobei an dem Dichtelement ein Durchgang für das Sperrelement ausgebildet ist. Somit kann die Rasteinrichtung zusätzlich eine Dichtfunktion erfüllen, so dass eine, vorzugsweise einteilige, Rast- und Dichteinrichtung besteht. Dadurch wird ermöglicht, dass erforderliche Schutzarten, beispielsweise IP67, IP68 und IP69K, erreicht werden können. Generell kann ein Eindringen von Flüssigkeiten sowohl von Spritzwasser, bei Beregnung und zeitweisem Untertauchen als auch bei Reinigung mit einem Dampfstrahler bei der erfindungsgemäßen Lehre verhindert werden. Des Weiteren zeichnet sich der Steckverbinder durch eine gute Chemikalienbeständigkeit gegenüber handelsüblichen Reinigungsmitteln, insbesondere bzgl. Automobilreiniger, aus. Auch ist eine gute Resistenz gegen auslaufende Batterieflüssigkeiten gegeben und ist eine zuverlässige Funktion nach längeren Standzeiten sichergestellt. Konstruktiv ist die Ausführung der Rasteinrichtung als mehrkomponentiges Bauteil denkbar, wobei an eine Hartkomponente, die den Rastbereich ausbildet, an einen thermoplastischen Elastomer anspritzt ist und somit die Dichtfunktion erfüllt. So werden zusätzliche Schnittstellen vermieden, was die Sicherheit gegen eindringende Flüssigkeiten erhöht. Ferner werden die Kosten bei den Stückzahlen bzgl. der Akkumulatoren gesenkt. Die Chemikalienbeständigkeit wird insbesondere durch die Materialwahl der Rasteinrichtung bestimmt. So können als Hartkomponente beispielsweise Polyamid (PA) und als Weichkomponente beispielsweise Ethylen-Propylen-DienKautschuk (EPDM) oder hydrierter Acrylnitrilbutadien-Kautschuk (HNBR) verwendet werden. Im Konkreten kann an und/oder in dem Durchgang mindestens eine, vorzugsweise umlaufende, Dichtlippe ausgebildet sein. Somit ist eine Abdichtung gegenüber dem Sperrelement realisierbar. Alternativ oder zusätzlich kann an einer dem Rastelement abgewandten Seite des Dichtelements mindestens eine, vorzugsweise umlaufende, Dichtlippe ausgebildet sein.

Zur Realisierung einer möglichst platzsparenden Konstruktion kann das Sperrelement an dem Kupplungsgehäuse angeordnet sein.

In vorteilhafter Weise kann das Sperrelement stiftförmig, elliptisch oder scheibenförmig ausgebildet sein und/oder kann das Sperrelement als Exzenterwelle ausgebildet sein. Wesentlich ist, dass das Sperrelement von einer das Rastelement bzw. die Rastelemente blockierenden Stellung in eine die Rastelemente freigebende Stellung hin und her verbringbar ist. Bei der Realisierung als elliptisch geformtes, insbesondere scheibenförmigen, Sperrelement ist denkbar, dass dieses durch Drehung, beispielsweise um 90° um seinen Mittelpunkt, von der Sperrposition in die Freigabeposition verbringbar ist. Steht die Hauptachse in der waagrechten Stellung, so kann der Mechanismus geschlossen sein. Befindet sich die kürzere Nebenachse in dieser Stellung, so kann der ist der Mechanismus entriegelt sein. Die Drehung kann vorzugsweise durch einen Stellmotor oder Drehmagnet realisiert sein, wobei auch andere Drehaktuatoren denkbar sind.

In weiter vorteilhafter Weise kann das Sperrelement über einen elektrischen Antrieb bewegbar sein. Hierbei kann es sich um einen Aktor handeln, vorzugsweise einen Linearaktuator und/oder einen Drehantrieb. Sofern der elektrische Steckverbinder beispielsweise für ein Elektrofahrzeug genutzt wird, ist es denkbar und von Vorteil, dass der Aktor über die Bordelektronik des Fahrzeugs steuerbar ist. Im Konkreten kann ein Hubmagnet und/oder ein Formgedächtnisaktuator und/oder ein Stellmotor und/oder ein Drehmagnet, beispielsweise ein drückender Hubmagnet, genutzt werden.

Ein weiterer Vorteil besteht darin, dass bewusst ein Aktor genutzt wird, der bei seiner Verwendung ein Geräusch erzeugt, so dass eine akustische Rückkopplung an den Nutzer erfolgt

In weiter vorteilhafter Weise kann an dem Verriegelungsbügel ein Vorsprung ausgebildet sein, wobei durch ein Verbringen des Verriegelungsbügels in eine Notentriegelungsposition die Rastelemente durch den Vorsprung von dem Sperrelement wegdrückbar sein können. Hierzu kann der Verriegelungsbügel beispielsweise in Richtung des Kupplungsgehäuses gedrückt werden. Eine solche Konstruktion ist insbesondere in Kombination mit einem drückenden Hubmagnet oder einem ähnlich wirkenden Aktor von Vorteil. Diese ziehen mit Bestromung das Sperrelement zurück, so dass das Rastelement bzw. die Rastelemente freigegeben sind und der Verriegelungsbügel geöffnet werden kann. Es bleibt somit lediglich die Verrastung durch Rastelemente und die Rastaufnahme wirksam. Ferner ist denkbar, ein Elastomer zur Realisierung der Rasteinrichtung bzw. des Rastelements oder der Rastelemente zu verwenden, so dass unter großer Krafteinwirkung die Rastaufnahme die Rastarme zusammendrückt und so die Verriegelung freigibt.

In besonders vorteilhafter Weise kann/können eine Akustikeinrichtung und/oder eine Optikeinrichtung angeordnet sein, so dass ein akustisches und/oder optisches Signal zum Anzeigen der geschlossenen und/oder der geöffneten Position des Verriegelungsbügels und/oder zum Anzeigen eines Stromflusses erzeugt werden. Somit wird der Nutzer auf einfache Weise über den Zustand der Steckverbindung informiert.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung eine Explosionsansicht ein Ausführungsbeispiel eines erfindungsgemäßen Steckverbindersystems,
- Fig. 2: in einer schematischen Darstellung eine perspektivische Ansicht des Steckverbindersystems gemäß Fig. 1,
- Fig. 3: in einer schematischen Darstellung eine vergrößerte Ansicht eines Details von Fig. 2,
- Fig. 4: in einer schematischen Darstellung eine perspektivische Ansicht der Rasteinrichtung des Steckverbindersystems gemäß den Figuren 1 bis 3, und
- Fig. 5: in einer schematischen Darstellung eine geschnittene Seitenansicht der Rasteinrichtung gemäß Figur 4.

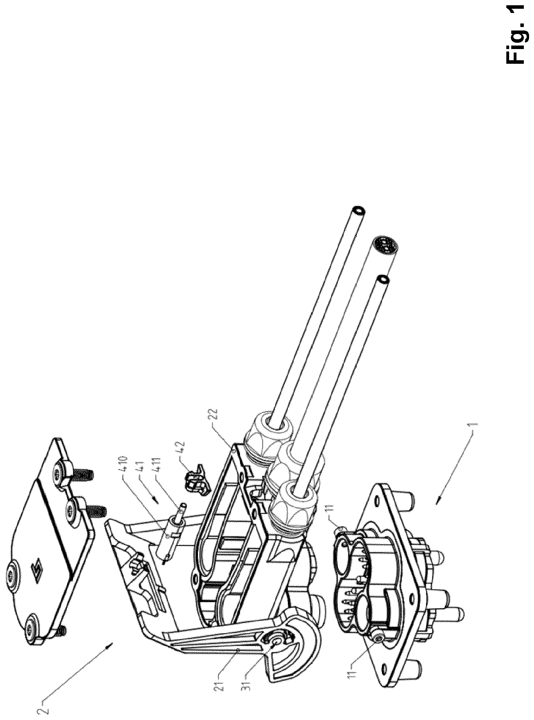

Die Figuren 1 bis 5 zeigen ein Ausführungsbeispiel eines erfindungsgemäßen Steckverbindersystems, das einen erfindungsgemäßen Steckverbinder 2 sowie einen zweiten Steckverbinder 1 aufweist. Dabei sind gleiche Elemente jeweils mit den gleichen Bezugszeichen versehen.

Figur 1 zeigt eine Explosionsdarstellung eines Steckverbindersystems mit einem erfindungsgemäßen elektrischen Steckverbinder 2, der ein Kupplungsgehäuse 22 und einen Verriegelungsbügel 21 aufweist, wobei der Verriegelungsbügel 21 zwei Seitenarme und ein zwischen diesen angeordnetes Verbindungselement umfasst. Das Kupplungsgehäuse 22 ist über einen Gehäusedeckel verschließbar. Der Verriegelungsbügel 21 ist über zwei Gelenke 31 an dem Kupplungsgehäuse 22 drehbar angeordnet. Des Weiteren ist ein zweiter elektrischer Steckverbinder 1 dargestellt.

Der erfindungsgemäße Steckverbinder weist des Weiteren einen elektrischen Antrieb 41 bzw. Aktor, eine Rasteinrichtung 42 und eine im Verriegelungsbügel 21 angeordnete Rastaufnahme 211 auf.

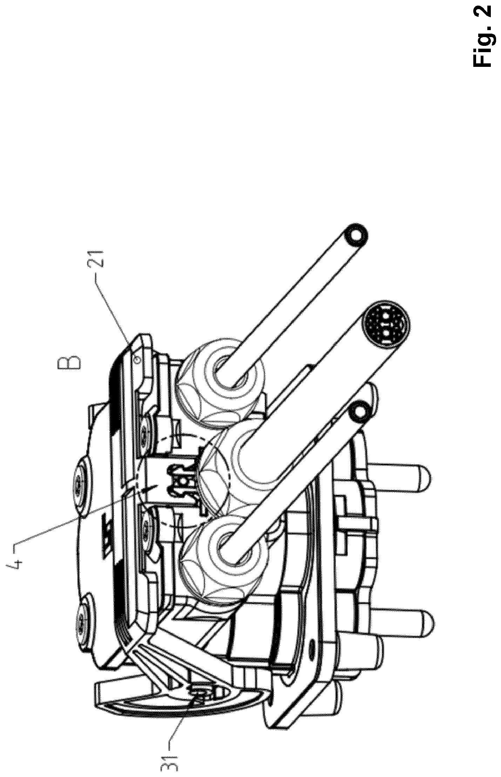

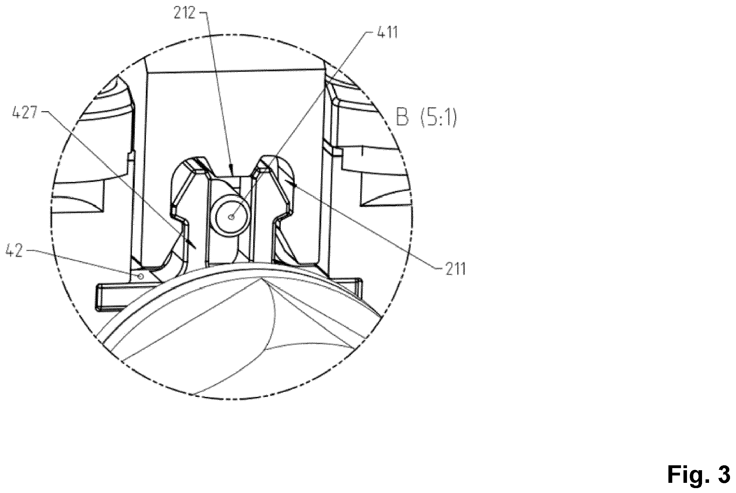

Fig. 3 zeigt in einer vergrößerten Darstellung das Detail 4 von Fig. 2. Daraus geht hervor, dass sich das Sperrelement 411 des Aktors 41, beispielsweise eines Hubmagneten 410, in der Sperrposition zwischen den als Rastarmen ausgebildeten Rastelementen 427 der Rasteinrichtung 42 befindet und somit jegliche Auslenkung der Rastarme 427 blockiert, so dass ein Entriegeln in dieser Anordnung nicht möglich ist.

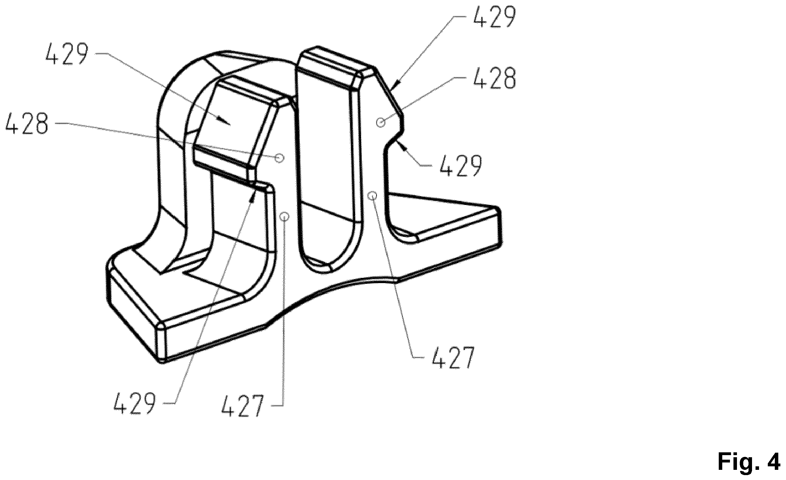

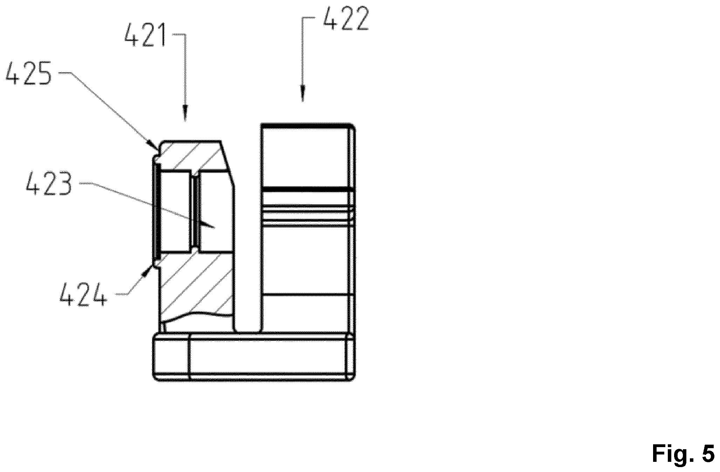

Die Rasteinrichtung 42 (vgl. Fig. 4 und 5) weist einen Rastmechanismus 422 in Form von zwei spiegelbildlich angeordneten Rastelementen 427 auf während ein zweites, dichtendes Teil, nämlich das Dichtelement 421 die gehäuseseitige Abdichtung bzw. die radiale Dichtung des beweglichen Sperrelements 411 realisiert. Das Dichtelement 421 weist einen Durchgang 423 mit umlaufenden Dichtlippen auf. Des Weiteren ist an einer den Rastelementen 427 abgewandten Seite 425 eine zweite Dichtgeometrie 424 in Form von umlaufenden Dichtlippen ausgebildet.

Die Rasteinrichtung 42 kann vorzugsweise einteilig ausgeführt sein, beispielweise mehrkomponentig als Hart-Weichverbindung. Ohne Dichtlippe auf der ebenen Anlagefläche 425 kann prinzipiell auch noch ein O-Ring direkt angrenzend verwendet werden.

Der Rastmechanismus 422 ist mittels zweier beweglicher, spiegelbildlich angeordnete Rastelemente 427 ausgebildet. An den Rastelementen 427 sind jeweils Rasthaken 428 angeordnet. Durch als Fasen realisierte Einführschrägen 429 ist sichergestellt, dass sowohl das Einrasten als auch das Entriegelung optimal möglich ist. Dazu werden die Rastelemente 427 beweglich ausgeführt, die sich beim Einrasten bzw. Entriegeln entlang einer Rastgeometrie der Rasteinrichtung 42 bewegen. Die Verriegelung erfolgt im Zusammenwirken des elektromechanischen Aktors 41 und dem Sperrelement 411.

Sollte beim Entriegeln die Kraft des Aktors 41, beispielweise aufgrund des Akkumulatorstandes, nicht ausreichen, das Sperrelement 411 zurückzufahren, so ist eine mechanische Hilfe vorgesehen. Durch Herunterdrücken des Verriegelungsbügels 21 drückt der Vorsprung 212 die beiden Rastelemente 427 auseinander. Dabei wird das Sperrelement 411 freigelegt, so dass es kräftefrei zurückfahren kann.

Abgedichtet wird sowohl das bewegliche Sperrelement 411 als auch das Kupplungsgehäuse 22. Das Dichtelement 421 wird stirnseitig an das Kupplungsgehäuse 22 gedrückt. Des Weiteren kann die Rasteinrichtung 42 auch im mehrkomponentigen Kunststoffspritzverfahren hergestellt sein. Dazu kann das Dichtelement 421 als Elastomer an die beispielsweise als Hartteil ausgeführten Rastelemente 427 angespritzt werden. So kann eine Optimierung der jeweiligen Funktionen erreicht werden. Eine weitere Abdichtungsalternative ist auch durch Einkleben der Rasteinrichtung 42 in das Kupplungsgehäuse 22 denkbar.

Die Funktion ist somit wie folgt: Beim Schließen des Verriegelungsbügels 21 wird die Rasteinrichtung 42, die fest mit dem Kupplungsgehäuse 22 verbunden ist, von der im Verriegelungsbügel 21 befindlichen Rastaufnahme 211 aufgenommen. Aufgrund einer entsprechenden konstruktiven Auslegung lässt sich der Verriegelungsbügel 21 so realisieren, dass das Schließen des Verriegelungsbügels 21 auch bei großen Steckkräften komfortabel möglich ist. Mit Hilfe der an dem zweiten Steckverbinder 1 befindlichen Verriegelungselemente 11, die hier beispielsweise als Stifte ausgebildet sind, und einer korrespondierenden Ausnehmung, beispielsweise Nut, in dem Verriegelungsbügel 21 wird das Kupplungsgehäuse 22 von dem zweiten Steckverbinder 1 regelrecht herangezogen.

Sowohl beim Öffnen als auch beim Schließen werden die einzelnen Rastelemente 427 durch die Rastaufnahme 211 des Bedienungsbügels 21 zwangsgeführt. So werden beim Schließen des Verriegelungsbügels 21 die beiden spiegelbildlich angeordneten, elastisch ausgeführten Rastarme 427 im Bereich der Rasthaken 428 zusammengedrückt. Entsprechende Einführschrägen 429 an den Rasthaken 428 bzw. an der symmetrisch ausgeführten inneren Rastaufnahme 211 erleichtern das Einführen. Nach dem Überwinden der Verengung entspannen sich beide Rastelemente 427 wieder, so dass diese ohne weitere mechanische Belastung in der Rastaufnahme 211 angeordnet sind. Die eigentliche Verriegelung des Verriegelungsbügels 21 erfolgt danach durch das Blockieren der Rastelemente 427 mittels des Sperrelements 411.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: zweiter Steckverbinder
- 2: Steckverbinder
- 21: Verriegelungsbügel
- 211: Rastaufnahme
- 212: Vorsprung
- 22: Kupplungsgehäuse
- 31: Gelenk
- 4: Detail
- 41: Aktor
- 410: Hubmagnet
- 411: Sperrelement
- 42: Rasteinrichtung
- 421: Dichtelement
- 422: Rastmechanismus
- 423: Durchgang
- 424: zweite Dichtgeometrie
- 425: abgewandte Seite
- 427: Rastelement
- 428: Rasthaken
- 429: Einführschragen

## Patentansprüche

1. Elektrischer Steckverbinder, insbesondere zur Signal- und/oder Stromübertragung, vorzugsweise zum Laden von elektrischen Fahrzeugen bzw. vom Akkumulatoren elektrischer Fahrzeuge, mit einem Kupplungsgehäuse zur Verbindung mit einem korrespondierenden zweiten elektrischen Steckverbinder, wobei an dem Kupplungsgehäuse ein Verriegelungsbügel von einer geöffneten Position in eine geschlossene Position bewegbar angeordnet ist, wobei der Verriegelungsbügel eine Ausnehmung aufweist, in die ein Verriegelungselement des zweiten Steckverbinders in der geöffneten Position des Verriegelungsbügels einbringbar ist und wobei in der geschlossenen Position des Verriegelungsbügels das Verriegelungselement derart in der Ausnehmung angeordnet ist, dass das Kupplungsgehäuse form- und/oder kraftschlüssig mit dem zweiten Steckverbinder verbunden ist,
wobei an dem Kupplungsgehäuse eine Rasteinrichtung mit mindestens einem Rastelement angeordnet ist, wobei das Rastelement in der geschlossenen Position des Verriegelungsbügels in eine Rastaufnahme des Verriegelungsbügels eingreift und wobei ein elektrisch bewegbares Sperrelement angeordnet ist, das in einer Sperrposition eine Bewegung des Rastelements hemmt.

2. Elektrischer Steckverbinder nach Anspruch 1, **dadurch gekennzeichnet, dass** der Rastmechanismus als elastisches Rastelement, vorzugsweise mit einem am freien Ende angeordneten Rasthaken, ausgebildet ist.

3. Elektrischer Steckverbinder nach Anspruch 2, **dadurch gekennzeichnet, dass** zwei Rastelemente, vorzugsweise spiegelbildlich zueinander, angeordnet sind und dass das Sperrelement in der Sperrposition zwischen den Rastelementen angeordnet ist.

4. Elektrischer Steckverbinder nach einem der Ansprüche 1 bis 3, **dadurch gekennzeichnet, dass** der Verriegelungsbügel zwei Seitenarme und einen die Seitenarme verbindendes Verbindungselement aufweist und dass die Rastaufnahme an dem Verbindungselement, vorzugsweise mittig zwischen den Seitenarmen, angeordnet ist.

5. Elektrischer Steckverbinder nach einem der Ansprüche 1 bis 4, **dadurch gekennzeichnet, dass** an der Rastaufnahme ein Rastvorsprung ausgebildet ist, an dem das Rastelement in der geschlossenen Position des Verriegelungsbügels hintergreift, vorzugsweise mit einem Rasthaken.

6. Elektrischer Steckverbinder nach Anspruch 5, **dadurch gekennzeichnet, dass** an dem Rastvorsprung der Rastaufnahme eine Einführschräge ausgebildet ist, um das Einführen des Rastelements zu erleichtern.

7. Elektrischer Steckverbinder nach einem der Ansprüche 1 bis 6, **dadurch gekennzeichnet, dass** die Rasteinrichtung ein Dichtelement aufweist, wobei an dem Dichtelement ein Durchgang für das Sperrelement ausgebildet ist.

8. Elektrischer Steckverbinder nach Anspruch 7, **dadurch gekennzeichnet, dass** an und/oder in dem Durchgang mindestens eine, vorzugsweise umlaufende, Dichtlippe ausgebildet ist und/oder dass an einer dem Rastelement abgewandten Seite des Dichtelements mindestens eine, vorzugsweise umlaufende, Dichtlippe ausgebildet ist.

9. Elektrischer Steckverbinder nach einem der Ansprüche 1 bis 8, **dadurch gekennzeichnet, dass** das Sperrelement an dem Kupplungsgehäuse angeordnet ist.

10. Elektrischer Steckverbinder nach einem der Ansprüche 1 bis 9, **dadurch gekennzeichnet, dass** das Sperrelement stiftförmig, elliptisch oder scheibenförmig ausgebildet ist und/oder dass das Sperrelement als Exzenterwelle ausgebildet ist.

11. Elektrischer Steckverbinder nach einem der Ansprüche 1 bis 10, **dadurch gekennzeichnet, dass** das Sperrelement über einen elektrischen Antrieb bewegbar ist.

12. Elektrischer Steckverbinder nach Anspruch 11, **dadurch gekennzeichnet, dass** es sich bei dem elektrischen Antrieb um einen Aktor, vorzugsweise einen Linearaktuator und/oder einen Drehantrieb, insbesondere einen Hubmagnet und/oder einen Formgedächtnisaktuator und/oder einen Stellmotor und/oder einen Drehmagnet, beispielsweise einen drückenden Hubmagnet, handelt.

13. Elektrischer Steckverbinder nach einem der Ansprüche 1 bis 12, **dadurch gekennzeichnet, dass** an dem Verriegelungsbügel ein Vorsprung ausgebildet ist, wobei durch ein Verbringen des Verriegelungsbügels in eine Notentriegelungsposition das Rastelemente durch den Vorsprung von dem Sperrelement wegdrückbar ist.

14. Elektrischer Steckverbinder nach einem der Ansprüche 1 bis 13, **dadurch gekennzeichnet, dass** eine Akustikeinrichtung und/oder eine Optikeinrichtung angeordnet ist/sind, so dass ein akustisches und/oder optisches Signal zum Anzeigen der geschlossenen und/oder der geöffneten Position des Verriegelungsbügels und/oder zum Anzeigen eines Stromflusses erzeugbar ist.

15. Steckverbindersystem, insbesondere zur Signal- und/oder Stromübertragung, vorzugsweise zum Laden von elektrischen Fahrzeugen bzw. vom Akkumulatoren elektrischer Fahrzeuge, mit einem elektrischen Steckverbinder nach einem der Ansprüche 1 bis 14 und einem zweiten elektrischen Steckverbinder mit mindestens einem Verriegelungselement.
